# EUROPEAN PATENT SPECIFICATION

(11) **EP 2 052 004 B1**
(45) Date of publication and mention of the grant of the patent: **11.05.2011**
(21) Application number: 07788477.3
(22) Date of filing: 17.08.2007
(51) Int. Cl.: C08G 8/28, C08J 9/40

(54) **HYDROPHILIC BINDER SYSTEM FOR POROUS SUBSTRATES**
HYDROPHILES BINDEMITTELSYSTEM FÜR PORÖSE SUBSTRATE
SYSTÈME DE LIANT HYDROPHILE POUR SUBSTRATS POREUX

(30) Priority: 18.08.2006 EP 06017252
(43) Date of publication of application: 29.04.2009
(73) Proprietor: Rockwool International A/S, 2640 Hedehusene (DK)
(72) Inventor: GUDIK-SORENSEN, Mads, DK-4000 Roskilde (DK); HANSEN, Erling Lennart, DK-2820 Gentofte (DK)
(74) Representative: Barz, Peter
(86) International application number: PCT/EP2007/058568
(87) International publication number: WO 2008/020073

(56) References cited:
- WO-A-01/82683
- WO-A-92/04824
- GB-A- 1 336 426

## Description

### Field of the Invention

The present invention relates to a hydrophilic binder system which is particularly useful for bonding porous and especially fibrous substrates which are able to take up and hold water and are therefore suitable for agricultural and horticultural purposes, for instance, as a plant growth substrate. The present invention also relates to methods of producing the hydrophilic binder system and bonded substrates, and to the bonded porous substrates obtained.

### Background of the invention

Growth substrates for plants which are based upon man-made vitreous fibres such as stone wool, glass wool or slag wool have been known for many years; see, for instance, GB-A-1336426. These substrates may, e.g., be provided in the form of slabs, blocks, plugs or other coherent products or in the form of granulate.

Such plant growth products generally comprise a binder, often a phenol-formaldehyde resin or urea-formaldehyde resin, which provides integrity to the product. After application of the binder, the products are subjected to curing at high temperatures in a curing oven.

It is essential that these plant growth substrates are able to take up and hold water, and therefore a certain wettability is required. Phenol-formaldehyde resins, and to lesser degree urea-formaldehyde resins are, however, found to impart water repellency to mineral wool products and, therefore, it is well-known to include a wetting agent in the plant growth substrate in order to achieve the desired hydrophilicity and wettability; see, for instance, WO 92/04824 and WO 01/82683. Such wetting agents must exhibit good environmental compatibility, in particular, low phytotoxicity. Moreover, in view of the working conditions employed during production of the plant growth substrates, they must have good thermal stability and also provide products having proper wet and dry compression strength in addition to the desired water-uptake capacity and water retaining capacity.

However, over time conventional wetting agents often are washed out of the plant growth substrate leaving a product of insufficient wettability and water retaining capacity.

### Summary of the Invention

Accordingly, it is an object of the present invention to provide a hydrophilic binder system which is particularly useful for bonding porous and especially fibrous substrates suitable for agricultural and horticultural purposes, for instance, as a plant growth substrate.

A further object of the present invention is to provide a hydrophilic binder which is not readily washed out of the bonded products by aqueous media and, therefore, provides bonded products having improved long-term wettability and water-retaining capacity.

Another object of the present invention is to provide a process for preparing the hydrophilic binder system.

Still another object of the present invention is to provide a method of producing a bonded porous substrate using the hydrophilic binder system.

Yet another object of the present invention is to provide bonded porous substrate products having improved long-term wettability and water-retaining capacity.

According to a first aspect of the present invention, there is provided a process for preparing a hydrophilic binder which comprises:
(A) reacting at least one acid component selected from di- and polycarboxylic acids and anhydrides thereof and at least one polyhydroxy component selected from polyalkylene glycols, copolymers and derivatives thereof to form a polyalkylene glycol ester having carboxylic functionality; and
(B) reacting the obtained polyalkylene glycol ester with a phenolic resin.

### Description of the Preferred Embodiments

### Step A

The acid component used as a starting material in step (A) is at least one di- or polycarboxylic acid or an anhydride thereof. The acid component is preferably selected from aliphatic, cycloaliphatic, saturated, unsaturated and aromatic carboxylic acids and anhydrides.

More preferably, the acid component is selected from aliphatic di- or polycarboxylic acids, including saturated di- or polycarboxylic acids having 3 to 7 carbon atoms, such as succinic acid, glutaric acid, adipic acid, citric acid and malonic acid, or anhydrides thereof; and unsaturated di- or polycarboxylic acids having 4 to 7 carbon atoms or anhydrides thereof, such as maleic acid, fumaric acid and maleic anhydride; cycloaliphatic, di- or polycarboxylic acids or anhydrides thereof, such as tetrahydrophthalic acid, hexahydrophthalic acid and methyltetrahydrophthalic acid and the corresponding anhydrides; aromatic di- or polycarboxylic acids or anhydrides thereof, such as phthalic acid, methylphthalic acid, trimellitic acid, pyromellitic acid and the corresponding anhydrides.

The polyhydroxy component used as a starting material in step (A) is preferably selected from polyalkylene glycols such as polyethylene glycol (PEG), polypropylene glycol (PPG), polybutylene glycol (PBG) and mixtures and copolymers thereof. Also suitable are polyalkylene glycol derivatives including but not limited to polyalkylene glycol ethers and esters such as, for instance, mono alkyl ethers and esters, e.g. methyl PEG, ethyl PEG, propyl PEG, butyl PEG and mixtures and copolymers thereof.

The polyhydroxy component preferably has a molecular weight of between 150 and 20,000; more preferably between 150 and 10,000; in particular, between 200 and 5,000; and most preferably, between 300 and 1,000

A reaction scheme for the reaction between phthalic anhydride as the acid component and PEG as the polyhydroxy component is shown below.

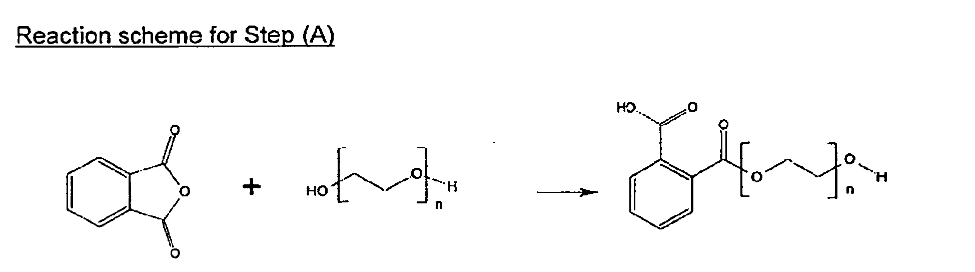

Index n preferably is within the range of from 3 to 1136 and would be, for instance, 4 for PEG 200; 6 for PEG 300; 9 for PEG 400; 13 for PEG 600; 18 for PEG 800; 22 for PEG 1000; 45 for PEG 2000; 113 for PEG 5000; 227 for PEG 10000; 454 for PEG 20000; and 1136 for PEG 50000.

The molar ratio of acid component to polyhydroxy component in step (A) preferably is within the range of from 0.5 : 1 to 5 : 1, more preferably 0.8 :1 to 2.5 : 1

The reaction in step (A) may optionally be carried out in the presence of a catalyst, preferably an amine catalyst such as, e.g., an aliphatic amine like triethanolamine, triethylamine or an aromatic or heterocyclic amine like imidazole.

Optionally, the reaction in step (A) may also be carried out in the presence of an aprotic, polar solvent such as a ketone like acetone, an ether like tetrahydrofurane, an ester like acetoacetate, or an amine like pyridine.

The reaction in step (A) is generally carried out at a reaction temperature of between room temperature and the boiling point of any solvent employed, preferably at a reaction temperature of at least about 60°C.

### Step B

The reaction in step (B) is normally carried out simultaneously with curing of the bonded porous substrate product.

For that purpose, the porous substrate is contacted with a liquid composition (I) comprising a polyalkylene glycol ester obtained in the reaction of step (A) and with a liquid composition (II) comprising a phenolic resin, or with a mixture of liquid compositions (I) and (II), and is then cured to obtain a bonded porous substrate

The liquid compositions (I) and (II) normally represent solutions or dispersions in water or a mixed solvent system comprising water and a water-miscible organic solvent, e.g., an alcohol. Water is the preferred solvent.

The liquid compositions (I) and (II) may be applied to the porous substrate either separately or simultaneously or in admixture. Application of the liquid compositions may be carried out by any conventional means, for instance, by spraying the liquid compositions onto the substrate or by impregnating the substrates with the liquid compositions, for example, in a tumbler.

The phenolic resin used in step (B) is the condensation reaction product of at least one phenolic component and at least one aldehyde. Suitable phenolic components include phenol, naphthol, anthranol, substituted derivatives of these phenolic components, and mixtures thereof. Specific examples of substituted phenols include m-cresol, m-propylphenol, m-isobutylphenol, m-sec-butylphenol, m-tertbutylphenol, m-chlorophenol, m-bromophenol, m-phenylphenol, m-cetylphenol, m-cumylphenol, m-hydroxyacetophenone, m-hydroxybenzophenone, and m-d-limonene phenol The corresponding phenols substituted in the ortho and/or para positions may be employed as well..

Included among the phenolic components which may be used are those known as "cresylic acids" which often comprise heterogeneous mixtures having only two reactive hydrogen positions on each molecule; i.e.. compounds unsubstituted in the ortho- and para-positions. These compounds may include the following: 3,5-xylenol, m-cresol, 3,4-xylenol, 2,5-xylenol, 2,3-xylenol, phenol, p-cresol, o-cresol, 2,4-xylenol, and 2,6-xylenol. Cresylic acids or tar acids may include phenol and its homologues such as, e.g., cresols, xylenols, trimethyl phenols, ethyl phenols, and higher boiling compounds such as dihydroxy phenols, polycyclic phenols and the like. These are often obtained by low-temperature trimerization of coal, lignite, and the like; as a conventional high-temperature coke oven tar, as the liquid product of thermal or catalytic petroleum cracking; or as coal hydrogenation products.

Polyhydroxy aromatic compounds, such as resorcinol, may also be used as phenolic components. Also suitable are mixtures of aniline and phenol which react with an aldehyde or ketone to produce a resole. Additionally, sodium lignosulfonate may be substituted for part of the phenolic component.

Suitable aldehydes of the phenolic resin include formaldehyde and any of its variations, such as higher concentrations of formalin, e.g. 30 wt% or higher, or its oligomeric and polymeric forms such as paraformaldehyde or trioxane. The aldehyde should not have more than 8 carbon atoms. Preferred aldehydes are those having from 1 to 4 carbon atoms, such as formaldehyde, paraldehyde, acetaldehyde, propionaldehyde and isobutyraldehyde. Other aldehydes include isopentaldehyde, furfuraldehyde, 2-ethylhexanal, ethylbutyraldehyde, heptaldehyde, benzaldehyde and crotonaldehyde. Glyoxal may also be used. These other aldehydes and mixtures thereof may be used in place of formaldehyde or as a partial substitution thereof, but preferably, formaldehyde in one of its commercially available forms is used.

Suitable phenol-formaldehyde resins, which represent the preferred phenolic resins in the present invention, are conventional water-soluble resole resins or water-dispersible novolak resins, resole resins being the preferred phenol-formaldehyde resins used in the present invention.

As is well known in the art, resoles represent mixtures of hydroxymethyl phenols cross-linked by methylene and methylene ether linkages which are prepared by alkaline-catalysed reaction of phenols with formaldehyde in a molar ratio of 1 : >1, preferably 1 : 1.25 to 1 : 6, such as 1 : 2 to 1 : 5 and, particularly, 1 : 2.5 to 1 : 4.5

On the other hand, novolac resins do not contain methylol groups but comprise phenol groups cross-linked by methylene bridging groups. Novolacs are obtained in an acid-catalysed reaction between phenols and formaldehyde in a molar ratio of >1 : 1, preferably 1,15 : 1 to 2 : 1.

The phenol-formaldehyde resin may have been modified with urea, melamine, dicyandiamide, aminoplasts or mixtures thereof. Particularly preferred are phenol-formaldehyde resins which, after condensation of phenol and formaldehyde, have been further condensed with urea (PUF resins).

In accordance with the present invention, any conventional phenol-formaldehyde resin or modified phenol-formaldehyde resin may be employed, for instance, the resins disclosed in US-A-5371140, US-A-5670571, EP-A-148050, EP-A-512908 and EP-A-1084167, the entire disclosure of which is incorporated herein by reference. These phenolic resins may contain conventional additives such as, e.g., thickeners, protective colloids, lubricants, hardeners, defoamers, plasticizers, softening agents, fire retardants, pigments, fillers and the like.

In the following, the step (B) reaction between the reaction product of phthalic anhydride as the acid component and PEG as the polyhydroxy component obtained in step (A) and a phenol-formaldehyde resin as the phenolic resin is illustrated.

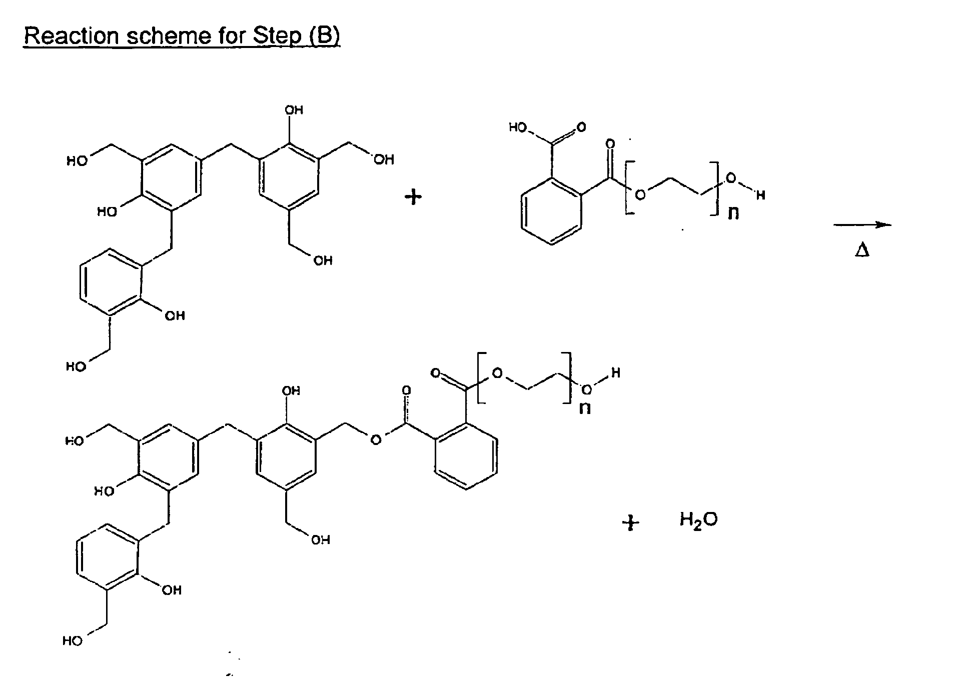

The reaction in step (B) is preferably carried out using a 5-50 weight% aqueous solution of the polyalkylene glycol ester obtained in step (A) as liquid composition (I) and a 5-30 weight% aqueous solution of phenolic resin as liquid composition (II).

The weight proportion of the polyalkylene glycol ester generally is within the range of 0.01 to 15% w/w, preferably 0.1 to 10% w/w, and most preferably 0.5 to 5% w/w, based on solids of the finished binder comprising polyalkylene glycol ester and phenolic resin.

Both liquid compositions (I) and (II) are applied to the substrate in an amount sufficient to achieve a binder concentration of the bonded porous substrate of between about 0.5 and 15 wt-%, preferably between about 1 and 8 wt-%, based on binder solids.

It goes without saying, that any additional conventional additives such as surface active agents and other soluble polymers such as polyacrylic resins, may be applied to the porous substrate either together with liquid compositions (I) and/or (II) and/or in a separate stream.

The porous substrate may be selected from any conventional substrate which is useful for agricultural, horticultural and architectural purposes and, in particular, for plant growth substrates. Specific examples of suitable substrate materials are, for instance, man-made vitreous fibres such as mineral wool, stone wool, glass wool or slag wool; natural fibres, particularly plant fibres such as coco fibres and cotton; cellulosic and lignocellulosic fibres; and inorganic materials such as perlite beads and intumescent inorganic materials.

After application of the binder components of the hydrophilic binder system in accordance with the present invention to the porous substrate, the bonded product is cured at a curing temperature of from 150°C to 300°C, preferably 200°C to 260°C. When using natural fibres or other organic materials as a substrate, the curing temperature should, of course, not be above the decomposition or burning temperature of these materials..

After curing, the bonded substrate may be cut or shaped into a desired form such as, e.g., slabs, mats, blocks, plugs, cubes or the like.

The bonded porous product obtained is useful for agricultural, horticultural and architectural purposes, for instance, as a plant growth material, for roof gardens and for thermal and/or acoustic insulation products. In order to prepare a plant growth material, the bonded porous product may be combined in the usual manner with other composite layers (wrapping foil etc.) and additives such as, for instance, nutrients/fertilizers and fillers like, e.g., clay.

The following non-limiting examples are intended to further illustrate the invention.

### Example 1

16-54 g (0.112 mol) of phthalic anhydride (PhAh) and 33,5 g (0.112 mol) of PEG 300 (molar ratio of PhAh : PEG = 1 : 1) are weighed and put into a round bottomed flask equipped with a four-necked glass joint and a motor stirrer. The setup is placed in a heating element and stirring is started. After reacting the mixture at 95°C for 18 hours, the reaction product is recovered.

The PEG ester obtained has a contact angle against water of 57° when placed on a glass slide. Its surface free energy, determined in accordance with the van Oss-Good method, is 54.4 mN/m.

### Example 2

33.02 g (0.223 mol) of phthalic anhydride (PhAh) and 33.6 g (0.112 mol) of PEG 300 (molar ratio of PhAh : PEG = 2 : 1) are weighed and put into a round bottomed flask equipped with a four-necked glass joint and a motor stirrer. The setup is placed in a heating element and stirring is started. The solution is first heated to approx. 120°C until the PhAh is dissolved. Thereafter the solution is transferred to an oven/heating cupboard at 95°C and left for 18 hours.

The PEG ester obtained has a contact angle against water of 63° when placed on a glass slide. Its surface free energy, determined in accordance with the van Oss-Good method, is 51.6 mN/m

### Example 3

9.91 g (0..067 mol) of phthalic anhydride (PhAh) and 40..2 g (0.067 mol) of PEG 600 (molar ratio of PhAh : PEG =1 : :1) are weighed and put into a round bottomed flask equipped with a four-necked glass joint and a motor stirrer. The solution is first heated to approx 120°C until the PhAh is dissolved. Thereafter the solution is transferred to an oven/heating cupboard at 95°C and left for 18 hours.

The PEG ester obtained has a contact angle against water of 51 ° when placed on a glass slide. Its surface free energy, determined in accordance with the van Oss-Good method, is 54.8 mN/m.

### Example 4

19 81 g (0.134 mol) of phthalic anhydride (PhAh) and 40.1 g (0.067 mol) of PEG 600 (molar ratio of PhAh : PEG = 2 : 1) are weighed and put into a round bottomed flask equipped with a four-necked glass joint and a motor stirrer. The setup is placed in a heating element and stirring is started. The solution is first heated to approx. 120°C until the PhAh is dissolved. Thereafter the solution is transferred to an oven/heating cupboard at 95°C and left for 18 hours.

The PEG ester obtained has a contact angle against water of 52° when placed on a glass slide Its surface free energy, determined in accordance with the van Oss-Good method, is 48.9 mN/m.

### Example 5

27.02 g (0.182 mol) of phthalic anhydride (PhAh) and 36.7 g (0.092 mol) of PEG 400 (molar ratio of PhAh : PEG = 2 : 1) are weighed and put into a round bottomed flask equipped with a four-necked glass joint and a motor stirrer. The setup is placed in a heating element and stirring is started. The solution is first heated to approx 120°C until the PhAh is dissolved.. Thereafter the solution is transferred to an oven/heating cupboard at 95°C and left for 18 hours.

The PEG ester obtained has a contact angle against water of 58° when placed on a glass slide. Its surface free energy, determined in accordance with the van Oss-Good method, is 53.1 mN/m.

### Example 6

Each of the PEG esters obtained in Examples 1 to 5 is added to a commercial urea-modified phenol-formaldehyde resin (molar ratio of phenol : formaldehyde = 1 : 3.6) in an amount of 3-80; 3.57; 3.77: 3.72; and 3.66 % w/w based on the solids content.

The binder composition obtained is sprayed on mineral wool and thermally cured to give a bonded mineral wool product.

### Reference Example

When testing the urea-modified phenol-formaldehyde resin in the same manner as in Examples 1 to 5, it is found to have a contact angle against water of 67.5° and a surface free energy, determined in accordance with the van Oss-Good method, of 48.2 mN/m, respectively.

## Claims

1. A process for preparing a hydrophilic binder which comprises:
(A) reacting at least one acid component selected from di- and polycarboxylic acids and anhydrides thereof and at least one polyhydroxy component selected from polyalkylene glycols, copolymers and derivates thereof to form a polyalkylene glycol ester having carboxylic acid functionality; and
(B) reacting the obtained polyalkylene glycol ester with a phenolic resin.

2. The process of claim 1 wherein the acid component in step (A) is at least one di- or polycarboxylic acid or anhydride selected from aliphatic, cycloaliphatic, saturated, unsaturated and aromatic carboxylic acids and anhydride

3. The process of claim 2 wherein the di- or polycarboxylic acid or anhydride in step (A) is at least one carboxylic acid or anhydride selected from maleic acid, fumaric acid, tetrahydrophthalic acid, hexahydrophthalic acid, methyltetrahydrophthalic acid, phthalic acid, methylphthalic acid, trimellitic acid, pyromellitic acid and the corresponding anhydrides.

4. The process of any one of claims 1 to 3 wherein the polyhydroxy component in step (A) is at least one selected from polyethylene glycol (PEG), polypropylene glycol (PPG), polybutylene glycol (PBG), copolymers and derivatives thereof.

5. The process of any one of claims 1 to 4 wherein the molar ratio of acid component to polyhydroxy component in step (A) is within the range of from 0-5 : 1 to 5:1.

6. The process of any one of claims 1 to 5 wherein the reaction in step (A) is carried out in the presence of a catalyst.

7. the process of any one of claims 1 to 6 wherein the reaction in step (A) is carried out in the presence of an aprotic, polar solvent.

8. The process of any one of claims 1 to 7 wherein phenolic resin in step (B) is a phenol-formaldehyde resin or modified phenol-formaldehyde resin

9. The process of claim 8 wherein the phenol-formaldehyde resin is a water soluble resole

10. The process of claim 8 or 9 wherein the phenol-formaldehyde resin has been modified with urea, melamine, dicyandiamide or mixtures thereof.

11. A method of producing a bonded porous substrate which comprises the steps of
- contacting the porous substrate with a liquid composition (I) comprising a polyalkylene glycol ester having carboxylic acid functionality obtained by reacting at least one acid component selected from di- and polycarboxylic acids and anhydrides thereof and at least one polyhydroxy component selected from polyalkylene glycols, copolymers and derivatives thereof, and with a liquid composition (II) comprising a phenolic resin, or with a mixture of liquid compositions (I) and (II),
- and curing the bonded porous substrate.

12. The method of claim 11 wherein the liquid compositions (I) and (II) are applied either separately or simultaneously.

13. The method of claim 11 or 12 wherein the curing temperature is within the range of from 150°C to 300°C.

14. A bonded porous substrate obtainable by the method of any one of claims 11 to 13.

15. The bonded porous substrate of claim 14 which comprises man-made vitreous fibres or natural fibres, including plant fibres, cellulosic and lignocellulosic fibres.

16. The bonded porous substrate of claim 14 which comprises an inorganic porous material such as perlite beads.

17. A plant growth substrate product comprising the bonded porous substrate according to any one of claims 14 to 16.

18. The use of a bonded porous substrate according to any one of claims 14 to 16 - or of a plant growth substrate product according to claim 17 or agricultural, horticultural and architectural purposes.

19. The use of a polyalkylene glycol ester having carboxylic acid functionality, obtained by reacting at least one acid component selected from di- and polycarboxylic acids and anhydrides thereof and at least one polyhydroxy component selected from polyalkylene glycols, copolymers and derivates thereof, as a binder or binder component for bonding porous substrates.

## Patentansprüche

1. Verfahren zur Herstellung eines hydrophilen Bindemittels, das umfasst:
(A) das Umsetzen mindestens einer Säurekomponente ausgewählt aus Di- und Polycarbonsäuren und Anhydriden davon mit mindestens einer Polyhydroxykomponente ausgewählt aus Polyalkylenglycolen, Copolymeren und Derivaten davon, um einen Polyalkylenglycolester mit Carbonsäurefunktionalität zu bilden, und
(B) das Umsetzen des erhaltenen Polyalkylenglycolesters mit einem Phenolharz.

2. Verfahren nach Anspruch 1, wobei die Säurekomponente in Schritt (A) mindestens eine Di- oder Polycarbonsäure oder ein Anhydrid ausgewählt aus aliphatischen, cycloaliphatischen, gesättigten, ungesättigten und aromatischen Carbonsäuren und Anhydriden ist.

3. Verfahren nach Anspruch 2, wobei die Di- oder Polycarbonsäure oder das Anhydrid in Schritt (A) mindestens eine Carbonsäure oder ein Anhydrid ausgewählt aus Maleinsäure, Fumarsäure, Tetrahydrophthalsäure, Hexahydrophthalsäure, Methyltetrahydrophthalsäure, Phthalsäure, Methylphthalsäure, Trimellithsäure, Pyromellithsäure und den entsprechenden Anhydriden ist.

4. Verfahren nach irgendeinem der Ansprüche 1 bis 3, wobei die Polyhydroxykomponente in Schritt (A) mindestens eine ausgewählt aus Polyethylenglycol (PEG), Polypropylenglycol (PPG), Polybutylenglycol (PBG), Copolymeren und Derivaten davon ist.

5. Verfahren nach irgendeinem der Ansprüche 1 bis 4, wobei das Molverhältnis von Säurekomponente zur Polyhydroxykomponente in Schritt (A) im Bereich von 0,5 : 1 bis 5 : 1 liegt.

6. Verfahren nach irgendeinem der Ansprüche 1 bis 5, wobei die Reaktion in Schritt (A) in Anwesenheit eines Katalysators durchgeführt wird.

7. Verfahren nach irgendeinem der Ansprüche 1 bis 6, wobei die Reaktion in Schritt (A) in Anwesenheit eines aprotischen, polaren Lösungsmittels durchgeführt wird.

8. Verfahren nach irgendeinem der Ansprüche 1 bis 7, wobei das Phenolharz in Schritt (B) ein Phenol-Formaldehyd-Harz oder ein modifiziertes Phenol-Formaldehyd-Harz ist.

9. Verfahren nach Anspruch 8, wobei das Phenol-Formaldehyd-Harz ein wasserlösliches Resol ist.

10. Verfahren nach Anspruch 8 oder 9, wobei das Phenol-Formaldehyd-Harz mit Harnstoff, Melamin, Dicyandiamid oder Mischungen davon modifiziert worden ist.

11. Verfahren zur Herstellung eines gebundenen porösen Substrats, welches die Schritte
- des Kontaktierens des porösen Substrats mit einer flüssigen Zusammensetzung (1) umfassend einen Polyalkylenglycolester mit Carbonsäurefunktionalität, der durch Umsetzen mindestens einer Säurekomponente ausgewählt aus Di- und Polycarbonsäuren und Anhydriden davon mit mindestens einer Polyhydroxykomponente ausgewählt aus Polyalkylenglycolen, Copolymeren und Derivaten davon erhalten wird, und mit einer flüssigen Zusammensetzung (II) umfassend ein Phenolharz oder mit einer Mischung der flüssigen Zusammensetzungen (I) und (II)
- und des Härtens des gebundenen porösen Substrats umfasst.

12. Verfahren nach Anspruch 11, wobei die flüssigen Zusammensetzungen (I) und (II) entweder getrennt oder gleichzeitig angewendet werden.

13. Verfahren nach Anspruch 11 oder 12, wobei die Härtungstemperatur im Bereich von 150°C bis 300°C liegt.

14. Gebundenes poröses Substrat, erhältlich durch das Verfahren nach irgendeinem der Ansprüche 11 bis 13.

15. Gebundenes poröses Substrat nach Anspruch 14, das künstliche glasartige Fasern oder natürliche Fasern, einschließlich Pflanzenfasern, Cellulose- und Lignocellulosefasern, umfasst.

16. Gebundenes poröses Substrat nach Anspruch 14, das ein anorganisches poröses Material wie Perlitperlen umfasst.

17. Pflanzenwachstumssubstrat-Produkt, umfassend das gebundene poröse Substrat nach irgendeinem der Ansprüche 14 bis 16.

18. Verwendung eines gebundenen porösen Substrats nach irgendeinem der Ansprüche 14 bis 16 oder eines Pflanzenwachstumssubstrat-Produkts nach Anspruch 17 zu landwirtschaftlichen, gartenbaulichen und architektonischen Zwecken.

19. Verwendung eines Polyalkylenglycolesters mit Carbonsäurefunktionalität, erhalten durch Umsetzen mindestens einer Säurekomponente ausgewählt aus Di- und Polycarbonsäuren und Anhydriden davon mit mindestens einer Polyhydroxykomponente ausgewählt aus Polyalkylenglycolen, Copolymeren und Derivaten davon, als ein Bindemittel oder eine Bindemittelkomponente zum Binden von porösen Substraten.

## Revendications

1. Procédé pour préparer un liant hydrophile qui comprend :
(A) la réaction d'au moins un composant acide choisi parmi les acides di- et polycarboxyliques et leurs anhydrides et d'au moins un composant polyhydroxylé choisi parmi les polyalkylèneglycols, leurs copolymères et leurs dérivés pour former un ester de polyalkylèneglycol ayant une fonctionnalité acide carboxylique ; et
(B) la réaction de l'ester de polyalkylèneglycol obtenu avec une résine phénolique.

2. Procédé selon la revendication 1 où le composant acide dans l'étape (A) est au moins un acide ou anhydride di- ou polycarboxylique choisi parmi les acides et anhydrides aliphatiques, cycloaliphatiques, saturés, insaturés et aromatiques.

3. Procédé selon la revendication 2 où l'acide ou anhydride di- ou polycarboxylique dans l'étape (A) est un moins un acide ou anhydride carboxylique choisi parmi l'acide maléique, l'acide fumarique, l'acide tétrahydrophtalique, l'acide hexahydrophtalique, l'acide méthyltétrahydrophtalique, l'acide phtalique, l'acide méthylphtalique, l'acide trimellitique, l'acide pyromellitique et les anhydrides correspondants.

4. Procédé selon l'une quelconque des revendications 1 à 3 où le composant polyhydroxylé dans l'étape (A) est au moins un choisi parmi le polyéthylèneglycol (PEG), le polypropylèneglycol (PPG), le polybutylèneglycol (PBG), leurs copolymères et leurs dérivés.

5. Procédé selon l'une quelconque des revendications 1 à 4 où le rapport molaire du composant acide au composant polyhydroxylé dans l'étape (A) est dans la plage de 0,5 : 1 à 5 : 1.

6. Procédé selon l'une quelconque des revendications 1 à 5 où la réaction dans l'étape (A) est conduite en présence d'un catalyseur.

7. Procédé selon l'une quelconque des revendications 1 à 6 où la réaction dans l'étape (A) est conduite en présence d'un solvant polaire aprotique.

8. Procédé selon l'une quelconque des revendications 1 à 7 où la résine phénolique dans l'étape (B) est une résine phénol-formaldéhyde ou une résine phénol-formaldéhyde modifiée.

9. Procédé selon la revendication 8 où la résine phénol-formaldéhyde est un résol soluble dans l'eau.

10. Procédé selon la revendication 8 ou 9 où la résine phénol-formaldéhyde a été modifiée avec l'urée, la mélamine, le dicyandiamide ou des mélanges de ceux-ci.

11. Procédé de production d'un substrat poreux lié qui comprend les étapes de
- mise en contact du substrat poreux avec une composition liquide (I) comprenant un ester de polyalkylèneglycol ayant une fonctionnalité acide carboxylique obtenu par réaction d'au moins un composant acide choisi parmi les acides di- et polycarboxyliques et leurs anhydrides et d'au moins un composant polyhydroxylé choisi parmi les polyalkylèneglycols, leurs copolymères et leurs dérivés, et avec une composition liquide (II) comprenant une résine phénolique, ou avec un mélange de compositions liquides (I) et (II),
- et cuisson du substrat poreux lié.

12. Procédé selon la revendication 11 où les compositions liquides (I) et (II) sont appliquées séparément ou simultanément.

13. Procédé selon la revendication 11 ou 12 où la température de cuisson est dans la plage de 150°C à 300°C.

14. Substrat poreux lié pouvant être obtenu par le procédé selon l'une quelconque des revendications 11 à 13.

15. Substrat poreux lié selon la revendication 14 qui comprend des fibres vitreuses artificielles ou des fibres naturelles, y compris des fibres végétales, des fibres cellulosiques et lignocellulosiques.

16. Substrat poreux lié selon la revendication 14 qui comprend un matériau poreux inorganique comme des billes de perlite.

17. Produit de type substrat de croissance des plantes comprenant le substrat poreux lié selon l'une quelconque des revendications 14 à 16.

18. Utilisation d'un substrat poreux lié selon l'une quelconque des revendications 14 à 16 ou d'un produit de type substrat de croissance des plantes selon la revendication 17 à des fins agricoles, horticoles et architecturales.

19. Utilisation d'un ester de polyalkylèneglycol ayant une fonctionnalité acide carboxylique, obtenu par réaction d'au moins un composant acide choisi parmi les acides di- et polycarboxyliques et leurs anhydrides et d'au moins un composant polyhydroxylé choisi parmi les polyalkylèneglycols, leurs copolymères et leurs dérivés, comme liant ou composant de liant pour lier des substrats poreux.
